# EUROPEAN PATENT SPECIFICATION

(11) **EP 3 342 763 B1**
(45) Date of publication and mention of the grant of the patent: **10.11.2021**
(21) Application number: 16461585.8
(22) Date of filing: 29.12.2016
(51) Int. Cl.: C04B 26/16, C04B 18/02

(54) **A METHOD FOR PRODUCING A LUMINESCENT PAVEMENT, A LUMINESCENT PAVEMENT OBTAINED BY SAID METHOD, A COMBINATION AND USE OF THE COMBINATION**
VERFAHREN ZUR HERSTELLUNG VON EINER LUMINESZIERENDEN DECKE, DIE MIT DIESEM VERFAHREN HERGESTELLTE LUMINESZIERENDE DECKE, DIE KOMBINATION UND DIE ANWENDUNG DIESER KOMBINATION
PROCÉDÉ DE PRODUCTION D'UN REVÊTEMENT LUMINESCENT, LE REVÊTEMENT LUMINESCENT OBTENU SUIVANT CE PROCÉDÉ, LA COMBINAISON ET L'UTILISATION DE CETTE COMBINAISON

(43) Date of publication of application: 04.07.2018
(73) Proprietor: STRABAG Sp. z o.o., 05-800 Pruszków (PL)
(72) Inventor: Otkallo, Kamil, 02-495 Warszawa (PL); Kmita, Dominik, 63-900 Rawicz (PL); Ruttmar, Igor, 02-912 Warsaw (PL)
(74) Representative: Kowalewska, Joanna

(56) References cited:
- WO-A1-02/40421
- WO-A1-2014/111672
- WO-A1-2016/062873
- AU-A1- 2010 202 310
- JP-A- H09 328 344

## Description

### Technical field

The present invention relates to a method for producing a luminescent pavement, a luminescent pavement obtained by said method, a combination used in said method and the use of the combination.

### State of the art

Luminescence phenomenon is an ability of a material to emit light which is not caused by thermal energy. The luminescent substances are classified based on the cause of the light emission, inter alia as:
(i) chemiluminescent, in case of substances emitting light due to a chemical reaction,
(ii) electroluminescent, in case of substances emitting light under the influence of electric energy,
(iii) photoluminescent, in case of substances emitting light due to the absorption of light from visible spectrum,
(iv) scintillating, emitting light under the influence of ionizing radiation,
(v) sonoluminescent, in case of substances emitting light under the influence of ultrasounds,
(vi) triboluminescent, in case of substances emitting light due to a deformation of a body.

In general photoluminescent substances are classified as:
(i) fluorescent, which emit light only in the presence of an inducing factor,
(ii) phosphorescent, whereby the light emission remains for a certain time after removal of an inducing factor (e.g. it is a period from seconds to hours).

Luminescent substances (chemiluminescent, photoluminescent, etc.) have been known for many years and are used in various technical fields.

Aluminates of alkaline earth metals are examples of phosphorescent substances, which are characterized by a very long time of light emission. Such substances are usually activated by rare earth elements (e.g. europium and dysprosium). One member of said group is strontium aluminate (SrAl₂O₄), for which, in case of suitable excitation conditions, the period of light emission may last even for several hours (8-10). Derivatives of alkaline earth metals aluminates (including strontium aluminate) comprising different stoichiometric amounts of alkaline earth metal in relation to the aluminate residue are also known.

Strontium aluminate is used in various technical fields, for example as:
- a substance used in light emitting elements used in fishing (JPH08116845),
- a component of luminescent articles made of plastics, rubber, glass, etc. (US2012/233895, US2004/0021407), or
- a luminescent component of decals (WO2011/096822).

This substance is also used in various applications related to the production of pavement and road markings (road signs, road lanes, etc.). In such applications, strontium aluminate is often used in the form of a coating composition.

Document JPH10102443A describes a luminescent road element comprising a concrete tile element, in which a luminescent marker (e.g. arrow) made of resinous (e.g. epoxy, polyester, etc.) or ceramic matrix, comprising a luminescent substance (e.g. strontium aluminate doped with europium), is placed.

JPH11117211 discloses a pavement tile (e.g. made of nonglazed porcelain) comprising protruding elements with grooves filled with white paint and then synthetic resin mixed with a phosphor (e.g. strontium aluminate)

Patent application JPH09268795A describes parking blocks coated with a fluorescent paint, mainly consisting of strontium aluminate.

American patent document US5665793 discloses a composition useful as a water-based paint, comprising a phosphorescent substance (e.g. SrAl₂O₄ activated by europium and dysprosium) and a polyurethane resin, which is water miscible or soluble. Optionally, the composition may comprise an ingredient increasing friction force (e.g. sand, silica, ground marble etc.)

International application no. WO2012/140242 relates to a photoluminescent composition comprising a binder (being. e.g a transparent epoxy, polyester, polyurethane or polyacrylate resin) and a photoluminescent pigment (e.g. strontium aluminate) comprising particles having size of 5-1000 µm. Such compositions are used as coatings for construction elements (bricks, concrete, wood, plastics) and for textile coating.

International application no. WO2013/165321 describes fluorescent materials being a mixture comprising a base which is a construction material (e.g. gypsum, wall coating, combinations of inorganic and organic materials, epoxy resins, polyurethane, transparent lacquers) and a phosphorescent pigment (e.g. strontium aluminate). Such coating compositions may be used for pavement coating, making lines on pavements, etc.

Asphalt mixtures comprising strontium aluminate are also known. For example document US 2011/0140045 describes a phosphorescent asphalt mixture comprising a binder (transparent synthetic binder, bituminous binder), aggregate and a phosphorescent compound (e.g. SrAl₂O₄ doped with rare earth metal e.g. europium and dysprosium).

In turn, international application no. WO2014/205609 discloses a three component, thermocurable epoxy-asphalt mixture, consisting of maleimide-modified asphalt comprising aliphatic amine, polyamide/polyether amine and a compatibilizer; an epoxy resin and a fluorescent material (which may be a strontium aluminate doped with activator in the form of europium, samarium, erbium, neodymium, etc.).

In described applications, strontium aluminate is most often used in the form of a powdered pigment, but particles comprising a non-luminescent core coated with a layer comprising said substance, are also known.

Document CN201335255 discloses particles (e.g. quartz particles having various sizes - 0.07 - 1.6 mm) coated with a luminescent/reflective layer comprising a binder (comprising e.g. hydrophilic - epoxy, polyurethane, acrylic resin or combinations thereof) and a luminescent/reflective material particles (e.g. alkaline earth metal aluminate activated by a rare earth metal). The luminescent material particles may have a diameter of 0.008-0.1 mm.

JPH09328344 describes a method for producing a luminescent aggregate by making a powder luminescent layer comprising a phosphorescent pigment (e.g. strontium aluminate), a fluorescent pigment, and an inorganic binder, on aggregate particles and then by melting it.

JP2015199899 discloses light emitting granules comprising a luminescent pigment particles (e.g. strontium aluminate) coated with a silane coupling agent, white fluorescent dye and a glass powder. Such granules are mixed with a thermoplastic resin in order to obtain a coating material for road signs.

Luminescent pigments and aggregates comprising strontium aluminates are also commercially available. Examples of such products include: aggregates and pigments available from Universal One Corporation company (Ambient Glow Technology - AGT™ - SAND; Ambient Glow Technology - AGT™ - GLOW STONE), an aggregate LuminSignum available from EuroSignum sp. z o.o. company and luminescent stones available from NB Light sp. z o.o. company. In case of the aggregate Ambient Glow Technology - AGT™ - GLOW STONE and the aggregate LumiSignum, aggregate particles are made from a polyester resin bonded with luminescent pigment particles. In turn, in case of luminescent stones available from NB Light, sp. z o.o. company, a luminescent pigment is mixed with silica and alkaline metal and alkaline earth metal silicates.

Methods of producing pavements having luminescent properties are also described in the prior art. Document EP2774965 discloses a method for applying a photoluminescent layer including: (i) applying a base layer of liquid binder, (ii) introducing a powdered phosphor into the binder using pressurized air, (iii) seasoning the layer obtained in the described manner and optionally applying further layers in the same way.

Other document - GB2510009 relates to a luminous pavement obtained by spraying the ground with a binder from the first dispenser, spraying material comprising photoluminescent particles (e.g. strontium aluminate activated by a rare earth metal) and non-luminescent aggregate from the second dispenser, so that the binder binds the particulate material with the ground, and then providing the layer obtained in such manner with a liquid, waterproof sealing agent. Said method includes use of a mixture comprising 5.5-7.5% by wt. of photoluminescent particles and 92.5-94.5 % by wt. of non-luminescent. The method can be employed with respect to lighting up roads, footpaths and bike paths.

Based on the above prior art it is evident that there is a need for a method for producing pavement having luminescent properties, which does not require complicated procedures and equipment, provides a durable pavement which glows for a long time and which can be employed without using significant financial means, as well as with use of less diversified materials. Unexpectedly, the present invention fulfils above mentioned needs.

### Subject of the invention

The subject of the invention is a method for producing a luminescent pavement according to claim 1.

In a preferred variant of the invention, a layer of synthetic resin in an amount from about 0.15 to about 1.00 kg/m², preferably in an amount of about 0.5 kg/m², is used in step b) as the primer layer.

In a particularly preferred variant of the invention, in step b) a layer of a natural aggregate is applied on the synthetic resin layer, wherein preferably the natural aggregate is used in an amount up to about 1.0 kg/m², especially in an amount of about 0.15 kg/m².

In a preferred variant of the invention, the layer of an adhesive agent applied in step c) is a layer of a synthetic resin used in an amount from about 0.5 to about 4.0 kg/m², preferably from about 0.5 to about 2.0 kg/m², and more preferably in an amount of about 1.5 kg/m².

In a particularly preferred variant of the invention, the adhesive agent comprises a powdered second photoluminescent agent in an amount from 10 to 40% by weight based on the total weight of the adhesive agent and the second photoluminescent agent, wherein the second photoluminescent agent is selected from a group comprising alkaline earth metals aluminates activated by at least one rare earth metal.

Preferably, the first photoluminescent agent is strontium aluminate SrAl₂O₄ activated by europium and optionally dysprosium.

In a preferred variant of the invention, the luminescent aggregate and optional inert aggregate are applied in an amount from about 1.0 to about 4.0 kg/m², preferably in an amount of about 2.0 kg/m².

Preferably, step d) of finishing treatment includes applying an additional closing layer based on the synthetic resin, in an amount from about 0.2 to about 2.0 kg/m², preferably of about 0.9 kg/m².

In a preferred variant of the invention, the closing layer comprises, in the selected resin, a powdered third photoluminescent agent in an amount from 10 to 40% by weight based on their total weight, wherein the third photoluminescent agent is selected from a group comprising alkaline earth metals aluminates activated by at least one rare earth metal, and which is especially strontium aluminate or its derivatives.

The subject of the invention is also a luminescent pavement obtained with abovementioned method according to the invention.

The subject of the invention is also a combination comprising
a) a luminescent aggregate comprising at least one fraction containing particles having an average size in the range from about 0.8 to about 6 mm,
b) an inert aggregate comprising at least one fraction containing particles having an average size in the range from about 0.8 to about 6 mm, preferably from about 1 to about 4 mm, and
c) an adhesive agent,
   wherein the luminescent aggregate is a combination of a synthetic or natural carrier and a first photoluminescent agent,
   wherein the first photoluminescent agent is strontium aluminate or its derivatives, activated by at least one rare earth metal,
   wherein the amount of luminescent aggregate is from 8 to 99 % by weight, preferably 25% by weight, based on the total weight of the mixture of the luminescent aggregate and the inert aggregate.

Preferably, the first photoluminescent agent is strontium aluminate SrAl₂O₄ activated by europium and optionally dysprosium.

In a preferred variant of the invention, adhesive agent comprises powdered second photoluminescent agent in an amount from 10 to 40% by weight based on the total weight of the adhesive agent and a second photoluminescent agent, wherein the second photoluminescent agent is selected from a group comprising alkaline earth metals aluminates activated by at least one rare earth metal

The subject of the invention is also the use of the combination of the invention as defined above for producing a pavement.

### Advantages of the invention

Experiments conducted by the Applicant showed that by using the method of the invention it is possible to obtain, in a repeatable manner, an elastic, durable pavement having a high resistance to atmospheric conditions and traffic load. The luminescent properties of the pavement obtained by the method of the invention allow for obtaining a very long glowing time, reaching even 8-10 hours during summer (due to the time and angle of irradiation of the luminescent layer during the day), and 6-8 hours during winter.

This allows for marking pavement dedicated for pedestrian or bicycle traffic, either on pathway or sidewalk, or on both. It increases the awareness of pedestrians or cyclists and drivers of shared use of a road. It also increases the visibility of pathway or sidewalk. The designed technology may be also used in traffic calming methods. This contributes directly to the increase of safety of people using the pavement.

Additionally, the pavement obtained by the method of the invention is characterized by additional aesthetic value in the form of an effective afterglow.

The unexpected technical effects described above result from a specific selection of technical means used in the method of the invention.

### Description of the drawing figures

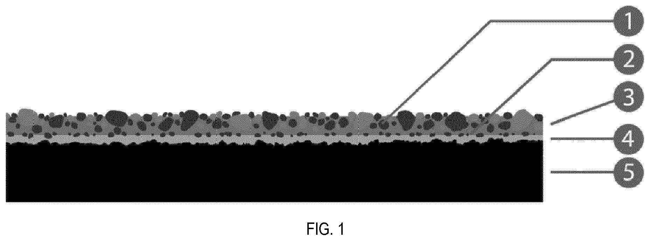

An embodiment of the invention is presented on drawing showing
Fig 1. presenting a luminescent pavement obtained by a variant of the method of the invention described in Example 1.

### Detailed description of the invention

In the first aspect, the invention relates to a method for producing a pavement having luminescent properties, for example surface of a roads, bike paths, footpaths, sidewalks, promenades, etc.

The method of the invention may be used for producing pavements having luminescent properties from scratch, i.e. when in given location there is no hard-surfaced pavement such as asphalt or concrete pavement. In such case, the first step of the method - an optional step of preparation of the substrate - includes preparation of hard-surfaced pavement for example asphalt pavement, concrete pavement, etc., in particular an asphalt pavement.

Alternatively, the method according to the invention may be used for modification of existing hard-surfaced pavement, e.g. pavement made of asphalt, concrete, etc., by providing it with luminescent properties. In such case, the first step includes actions aimed at cleaning the existing substrate from possible impurities, e.g. by using pressurized air from compressor. Optionally, the existing layer may be subjected to a treatment in order to level the tack-surface and make it uniform, for example by micro-milling. The preparatory actions may also include protecting pavement edges, kerbs and surrounding elements from being dirtied with the agents used for realization of the method of the invention, e.g. resin, for example with an assembly tape. Such protecting actions may be also conducted in case of producing hard-surfaced pavements from scratch as described above.

The first step of the inventive method is optional, as the method according to the invention may be used with respect to a substrate which has been prepared earlier.

Second step of the method is an optional step b) of applying a primer layer in order to fill irregularities of the substrate, to reinforce it, to bind the loose particles on the substrate surface, to improve adhesion to subsequently, applied layers (to avoid delamination), to decrease the absorptivity of the substrate and to decrease the consumption of materials forming subsequent layers applied according to the method of the invention. The second step of the inventive method is optional, as the method according to the invention may be used with respect to a substrate which has been already provided with a primer layer.

The primer layer can be any synthetic resin having a minimal adherence to the substrate which equals 1.5 MPa as measured according to Pull-Off test conducted according to PN-EN 1542:2000 and Road and Bridge Research Institute (Instytut Badawczy Dróg i Mostów) PB/CM-1/6 test protocol, preferably selected from a group including polyurethane resin, epoxy resin (e.g. MEGAdur EP 0 G available from TINES Megachemie SA), acrylic resin and mixtures thereof. More preferably, the synthetic resin is epoxy resin. Such resins are commercially available.

Thickness of the primer layer should be selected accordingly to the conditions, whereby it is important that too thin layer will not provide an appropriate priming of the pavement, while too thick layer will be uneconomical and additionally it will be too rigid and undurable. Preferably, priming layer is applied in an amount from about 0.15 to about 1.00 kg/m², more preferably in an amount from about 0.20 to about 1.00 kg/m², and most preferably in an amount about 0.50 kg/m².

Primer layer can be applied by any method known in the prior art, e.g. by hydrodynamic spraying, using rubber roller, foam roller, bristle roller, squeegee, steel float or wiper.

In a preferred embodiment of the invention, the step of applying a primer layer includes comprises an additional step of applying an aggregate layer. This step advantageously provides improved bonding with a subsequent layer applied according to the invention. The aggregate can be applied manually or by a machine. Any natural aggregate (crushed or non-crushed) may be used in this step, as well as any fine aggregate obtained during rock crushing. Conditions that has to be met in case of such material are an appropriate particle size and moisture content <0.1%. Such aggregate should have particle average size in the range from about 0.1 to about 0.8 mm, preferably from about 0.2 to about 0.8 mm, for example from about 0.4 to about 0.8 mm, more preferably from about 0.1 to about 0.5 mm, even more preferably from about 0.1 to about 0.3 mm. The amount of the aggregate used in this step should not exceed about 1.00 kg/m², but preferably and economically it equals about 0.15 kg/m². According to the observations made by the inventors, increasing the amount of the aggregate had not significantly increased the bonding strength. Increasing the amount of the aggregate led to weaker bonding strength with the primer layer and it was necessary to remove the aggregate.

In order to enable subsequent layers to be applied according to the method of the invention, the primer layer has to be dry and cured. Drying time depends on the environmental conditions - including temperature and air humidity. For example:
- in temperature of about +10°C, drying step may last from 24 to 96 hours,
- in temperature of about +20°C, drying step may last from 12 to 48 hours,
- in temperature of about +30°C, drying step may last from 8 to 24 hours.

Usually, the drying step involves leaving the primer layer to dry/cure. Optionally, drying step may be conducted using additional technical aiding means e.g. by the hot air stream obtained with the use of fan heaters. Alternatively, the drying process may be enhanced with chemical agents - with the use of bonding catalyst, used in an amount suitable for the type of resin used for the priming layer.

In a subsequent step of the inventive method, step c), the luminescent layer is applied.

This step consists of two stages. In the first stage at least one layer of the adhesive agent is applied, which function is to bind the luminescent aggregate particles and the inert aggregate particles on the substrate.

The adhesive agent layer may be any synthetic resin having a minimal adherence to the substrate which equals 1.5 MPa as measured according to Pull-Off test conducted according to PN-EN 1542:2000 and Road and Bridge Research Institute (Instytut Badawczy Dróg i Mostów) PB/CM-1/6 test protocol, preferably selected from a group including polyurethane resin (e.g. MEGAdur PUR 3 UV available from TINES Megachemie SA; Sikafloor®-326, available from Sika UAE L.L.C), epoxy resin, acrylic resin, polyaspartic resin, fast-breaking asphalt emulsion and mixtures thereof. Especially preferably, the adhesive agent is polyurethane resin. Such resins are commercially available.

Preferably, the adhesive agent layer is used in an amount from about 0.5 to about 2.0 kg/m², and even to about 4.0 kg/m². if two layers are applied. Preferably, adhesive agent is used in an amount of about 1.5 kg/m².

Usually, one layer of adhesive agent is used. Alternatively, two layers of that agent may be used.

Adhesive agent layer can be applied by any method known in the prior art, e.g. manually using rubber roller, foam roller, squeegee, steel float or wiper, or by spraying.

In a preferred embodiment of the invention, adhesive layer may contain a powdered second photoluminescent agent in an amount from 10 to 40% by weight based on the total weight of the adhesive agent and the second photoluminescent agent.

The second photoluminescent agent may be the same substance as the first photoluminescent agent described below, or may be a different compound having photoluminescent properties. Preferably, the second photoluminescent agent is selected from a group comprising alkaline earth metals aluminates activated by at least one rare earth metal, which especially is strontium aluminate or its derivatives (e.g. comprising different stoichiometric amounts of strontium in relation to the aluminate residue). Most preferably, the second photoluminescent agent is strontium aluminate SrAl₂O₄ activated by europium and optionally dysprosium.

Average particle size of the powdered second photo luminescent layer is in the range from about 40 to about 2000 µm, for example from about 650 to about 2000 µm, especially from about 140 to about 320 µm, for example from about 90 to about 150 µm, or from about 60 to about 90 µm, and in particular from about 40 to about 60 µm.

Subsequently, a luminescent agent is applied on the layer of an adhesive agent. In one embodiment of the invention, the luminescent agent comprises a luminescent aggregate in the mixture with an inert aggregate. In another, alternative embodiment of the invention, only the luminescent aggregate is applied on the layer of adhesive agent. Luminescent aggregate is applied in an amount from 8 to 100%, preferably from 8 to 99%, and more preferably in an amount of 25% or 20% based on the total weight of the luminescent aggregate and the inert aggregate. Such amount of luminescent aggregate provides a strong and long lasting luminescent effect.

The term "inert aggregate" describes in general an aggregate which does not exhibit luminescent properties. The inert aggregate may be any natural aggregate (crushed or non-crushed) or synthetic aggregate known in the art. Conditions that has to be met in case of such material are an appropriate particle size and a moisture content <0.1%. Additionally, it is recommended that such an aggregate has a bright colour. Preferably, the aggregate is a granite aggregate.

Preferably, the inert aggregate comprises at least one fraction containing particles having an average size in the range from 0.8 to 6 mm, preferably from 1 to 4 mm.

The luminescent aggregate used in the method of the invention is a combination of synthetic or natural carrier and the first photoluminescent agent. The first photoluminescent agent is strontium aluminate or its derivatives (e.g. comprising different stoichiometric amounts of strontium in relation to the aluminate residue) activated by at least one rare earth metal. In a preferred embodiment of the invention, the first photoluminescent agent is strontium aluminate SrAl₂O₄ activated by europium and optionally dysprosium.

The synthetic carrier may be a resin, preferably polyester resin. The natural carrier may be for example silica. Such aggregates are commercially available, e.g. as products available from Universal One Corporation company, EuroSignum sp. z o.o. company, Colux GmbH or NB Light sp. z o.o. company. Optionally, besides the carrier and the first photoluminescent agent, the luminescent aggregate may further comprise other components having luminescent properties (e.g. other phosphors), or auxiliary components.

Preferably, the luminescent aggregate comprises at least one fraction containing particles having an average size in the range from about 0.8 to about 6 mm. Other applicable ranges of average size of the aggregate particle include ranges from about 0.8 to about 3 mm, from about 2 to about 4 mm or from about 2 to about 5.6 mm. In an alternative embodiment of the invention, the luminescent aggregate comprises at least two fractions containing particles having an average size in the range from about 1 to about 2 mm and from about 2 to about 4 mm, respectively, wherein said fractions are used in weight ratio 3:1 (75% of fraction containing particles having an average size from about 1 to about 2 mm and 25% of fraction containing particles having an average size from about 2 to about 4 mm).

The luminescent aggregate and optional inert aggregate are applied in an amount from about 1.0 to about 4.0 kg/m², preferably in an amount of about 2.0 kg/m².

The selection of the aggregate mixture composition as well as sizes of the aggregate particles influences the glowing time of the luminescent layer. For example, the increase of the size of luminescent aggregate particles results in increased time and intensity of luminescence. Additionally, said selection may also have an influence on the obtained aesthetic effect. For example, the use of a particularly preferred mixture comprising 25% of a luminescent aggregate (comprising 25% of fraction containing particles having an average size from about 2 to about 4 mm and 75% of fraction containing particles having an average size from about 1 to about 2 mm) and 75% of an inert aggregate (granite) containing particles having an average size in the range from about 1 to about 4 mm resulted in obtaining especially attractive effect of a starry sky.

The layer of the luminescent aggregate and optionally the inert aggregate may be applied on whole pavement, or it may be applied on selected fragments thereof, for example forming marks of any shape such as lanes, arrows, marks designating the purpose of the pavement - for example indicating that particular pavement is a bike path.

After applying the layer of a luminescent aggregate and optionally an inert aggregate, the last step of the method is conducted - step d) of finishing treatment. This step may include typical finishing works, removing the protective means applied in step a) of the method, cleaning the elements adjacent to the pavement from the excess of resins, removing excess of the aggregate applied in step c), etc.

In a preferred embodiment of the invention, step d) includes applying an additional closing layer, which additionally protects the luminescent layer from factors, which decrease its durability (UV radiation, moisture, abrasion). The closing layer may be any synthetic resin, preferably selected from a group including polyurethane resin or derivatives thereof (e.g. MEGAprotect PUR 40/90 Clear, available from TINES Megachemie SA), epoxy resin, acrylic resin, polyaspartic resin (e.g. CAPITOLCOAT A106, available from CAPITOL COATINGS Polska Sp. z o. o.) and mixtures thereof. Such resins are commercially available. Closing layer is applied in an amount from about 0.2 to about 2.0 kg/m², preferably of about 0.9 kg/m². in case of polyurethane resins, from about 0.2 to about 0.6 kg/m². in case of polyaspartic resins.

In a preferred embodiment of the invention, the closing layer may comprise a powdered third photoluminescent agent in an amount from 10 to 40% by weight based on the weight of the adhesive agent.

The third photoluminescent agent may be the same substance as the first photoluminescent agent and/or the second photoluminescent agent, or it may be a different compound having photoluminescent properties. Preferably, the third photoluminescent agent is selected from a group comprising alkaline earth metals aluminates activated by at least one rare earth metal, which especially is strontium aluminate or its derivatives (e.g. comprising different stoichiometric amounts of strontium in relation to the aluminate residue). Most preferably, the third photoluminescent agent is strontium aluminate SrAl₂O₄ activated by europium and optionally dysprosium.

Average particle size of the powdered third photoluminescent layer is in the range from about 40 to about 2000 µm, for example from about 650 to about 2000 µm, especially from about 140 to about 320 µm, for example from about 90 to about 150 µm, or from about 60 to about 90 µm, and in particular from about 40 to about 60 µm.

In the second aspect, the invention relates to a pavement obtained by the method described above. Accordingly, the pavement may be a pavement road, a bike path, a footpath, a sidewalk, a promenade, etc. and may be manufactured from any material known in the art, e.g. asphalt, concrete, etc.

In the third aspect, the invention relates to a combination comprising a luminescent aggregate, an inert aggregate and an adhesive agent.

Such combination may be present in an unbound form, i.e. in a combination form in which said components are present separately in an unmixed state. In such case, mixing of components may be conducted directly before the step of applying the combination on the substrate/pavement. Alternatively, the combination may be present in the form of a mixture of components. This type of combination may be applied on the initially prepared, cleaned and optionally primed surface.

In the fourth aspect, the invention relates to the use of the combination described above for producing a pavement. Accordingly, the pavement may be a pavement road, a bike path, a footpath, a sidewalk, a promenade, etc. and may be made of any material known in the art, e.g. asphalt, concrete, etc.

According to the invention, the term "about" as used above and below, should be understood as a +/-5% deviation from the given value, which reflects inaccuracies that may arise in the course of the method according to the invention.

Particle sizes given above in the whole specification are determined according to tests described in EN 933-1 standard.

### Examples

### Example 1

The substrate, on which the method of the invention was conducted was an existing asphalt pavement.

In the first step, the pavement has been micro-milled, and as a result micro-milled asphalt pavement 5 was obtained. Subsequently, the pavement was cleaned from impurities using pressurized air from a compressor, and the edges of the route and curbs were protected from being dirtied by resin, using an assembly tape.

After protecting, the micro-milled asphalt pavement 5 layer was provided with a primer layer 4 in the form of an epoxy resin (MEGAdur EP 0 G resin) in an amount of 0.5 kg/m². .

Such fresh primer layer 4, before it turned into a gel, was provided with an aggregate layer 2, in the form of a washed quartz sand comprising grains having an average size from 0.2 to 0.8 mm, in an amount of 0.15 kg/m².

Subsequent to the application of the aggregate layer 2, the pavement was left for 12 hours in the temperature above 20°C. After that time, the layer of epoxy resin was dry and cured.

During drying of the primer layer, a mixture of a luminescent aggregate comprising polyester resin bonded with strontium aluminate doped with europium, e.g. AGT aggregate available from Universal One Corporation comprising 75% of fraction containing particles having an average size from 1 to 2 mm and 25% of fraction containing particles having an average size from 2 to 4 mm, was prepared. Subsequently, the obtained mixture of the luminescent aggregate was combined with an inert aggregate (granite aggregate) containing particles having an average size from 1 to 4 mm, yielding in mixture comprising 25% of the luminescent aggregate and 75% of the inert aggregate.

The dried primer layer 4 was provided with an adhesive agent layer 3 - polyurethane resin (MEGAdur PUR 3 UV available from TINES Megachemie SA) in an amount of 1.5 kg/m², and subsequently with layer 1 of the luminescent aggregate and the inert aggregate in an amount of 2 kg/m².

Subsequently, during the finishing work, the protective assembly tape was removed, the curb was cleaned from the resin, the excess of a topping was removed using the compressor and the brush, and the excess of the cured resin was removed from curbs using power tools and chisels.

The obtained pavement was durable and provided glowing for minimum 6 hours during winter and at least 8 hours during summer.

### Example 2

In this Example, the method was conducted analogously as in Example 1 except that a luminescent aggregate comprising one fraction containing particles having an average size from 2 to 5.6 mm available from Colux Gmbh and, in the same time, an increased amount (3 kg/m²) of a polyurethane resin available from Sika UAE L.L.C (Sikafloor-326), were used. The increased amount of the resin was necessary for providing appropriate binding of a larger aggregate. Additionally, for the purposes of protecting the aggregate from being pulled out as well as from atmospheric conditions a closing layer was provided in the form of a transparent polyaspartic resin e.g. available from CAPITOL COATINGS Polska Sp. z o. o. (CAPITOLCOAT A106) in an amount of 0.6 kg/m².

The obtained pavement provided analogous luminescent properties as the layer from Example 1, while a different visual effect during glowing was obtained.

### Example 3

In this Example, the method was conducted analogously as in Example 2 except that instead of a mixture of a luminescent aggregate and an inert aggregate only luminescent aggregate comprising particle fractions as described in Example 1, was used, and as a closing layer a polyurethane lacquer MEGAprotect PUR 40/90 Clear, available from TINES Megachemie SA was used in an amount of 0.9 kg/m².

The obtained pavement provided analogous luminescent properties as the layer from Example 1, but provided more intensive glowing effect after dark.

## Claims

1. A method for producing a luminescent pavement including steps of:
a) optional preparation of a substrate,
b) optional applying a primer layer,
c) applying a luminescent layer by applying at least one layer of an adhesive agent and applying a luminescent agent on the layer of adhesive agent,
d) finishing treatment,
**characterized in that**
in step c) a luminescent aggregate comprising, in each aggregate particle, a combination comprising synthetic or natural carrier permanently bonded with a first photoluminescent agent, and optionally inert aggregate, are used as a luminescent agent,
wherein the first photoluminescent agent is strontium aluminate or its derivatives, activated by at least one rare earth metal,
wherein luminescent aggregate is used in an amount from 8 to 100% by weight, preferably in an amount of 25 % by weight, based on the total weight of luminescent aggregate and inert aggregate.

2. The method according to claim 1 wherein a layer of synthetic resin in an amount from 0.15 to 1.00 kg/m², preferably in an amount of 0.5 kg/m², is used in step b) as the primer layer.

3. The method according to any of the preceding claims, wherein in step b) a layer of natural aggregate is applied on the synthetic resin layer.

4. The method according to claim 3 wherein the natural aggregate is used in an amount up to 1.0 kg/m², especially in an amount of 0.15 kg/m².

5. The method according to any of the preceding claims, wherein the layer of adhesive agent applied in step c) is a layer of synthetic resin used in an amount from 0.5 to 4.0 kg/m², preferably from 0.5 to 2.0 kg/m², and more preferably in an amount of 1.5 kg/m².

6. The method according to any of the preceding claims, wherein the adhesive agent comprises a powdered second photoluminescent agent in an amount from 10 to 40% by weight based on the total weight of the adhesive agent and the second photoluminescent agent, wherein the second photoluminescent agent is selected from a group comprising alkaline earth metal aluminates activated by at least one rare earth metal.

7. The method according to any of the preceding claims, wherein the first photoluminescent agent is strontium aluminate SrAl₂O₄ activated by europium and optionally dysprosium.

8. The method according to any of preceding claims, wherein the luminescent aggregate and optional inert aggregate are applied in an amount from 1.0 to 4.0 kg/m², preferably in an amount of 2.0 kg/m².

9. The method according to any of the preceding claims, wherein step d) of finishing treatment includes applying an additional closing layer based on the synthetic resin, in an amount from 0.2 to 2.0 kg/m², preferably 0.9 kg/m².

10. The method according to any of the preceding claims, wherein the closing layer comprises, in the selected resin, a powdered third photoluminescent agent in an amount from 10 to 40% by weight based on their total weight, wherein the third photoluminescent agent is selected from a group comprising alkaline earth metal aluminates activated by at least one rare earth metal.

11. A luminescent pavement obtained by the method as defined in any of the claims 1-10.

12. A combination comprising
a) a luminescent aggregate comprising at least one fraction containing particles having an average size in a range from 0.8 to 6 mm,
b) inert aggregate comprising at least one fraction containing particles having an average size in a range from 0.8 to 6 mm, preferably from 1 to 4 mm, and
c) an adhesive agent,
wherein each luminescent aggregate particle comprises a combination comprising a synthetic or natural carrier permanently bonded with a first photoluminescent agent,
wherein the first photoluminescent agent is strontium aluminate or its derivatives, activated by at least one rare earth metal,
wherein the amount of luminescent aggregate is from 8 to 99 % by weight, preferably 25% by weight, based on the total weight of the mixture of the luminescent aggregate and the inert aggregate.

13. The combination according claim 12, wherein the first photoluminescent agent is strontium aluminate SrAl₂O₄ activated by europium and optionally dysprosium.

14. The combination according to any of the preceding claims 12-13, wherein adhesive agent comprises powdered second photoluminescent agent in an amount from 10 to 40% by weight based on the total weight of the adhesive agent and the second photoluminescent agent, wherein the second photoluminescent agent is selected from a group comprising alkaline earth metal aluminates activated by at least one rare earth metal.

15. The use of the combination as defined in any of the preceding claims 12-14 for producing a pavement.

## Patentansprüche

1. Verfahren zur Herstellung einer lumineszierenden Beschichtung, umfassend die folgenden Schritte:
a) eine optionale Vorbereitung eines Substrats,
b) eine optionale Auftragung einer Grundierung,
c) Aufbringen einer lumineszierenden Schicht durch Aufbringen mindestens einer Schicht eines Haftmittels und Aufbringen eines lumineszierenden Mittels auf die Haftmittelschicht,
d) eine Endbehandlung,
**dadurch gekennzeichnet, dass**
im Schritt c) ein lumineszierendes Aggregat, das in jedem Aggregatpartikel eine Kombination von einem synthetischen oder natürlichen Träger umfasst, der permanent mit einem ersten fotolumineszierenden Mittel verbunden ist, und gegebenenfalls ein inertes Aggregat als ein lumineszierendes Mittel verwendet werden,
wobei das erste fotolumineszierende Mittel ein Strontiumaluminat oder seine Derivate ist, aktiviert durch mindestens ein Seltenerdmetall,
wobei das lumineszierende Aggregat in einer Menge von 8 bis 100 Gew.-%, vorzugsweise in einer Menge von 25 Gew.-%, bezogen auf das Gesamtgewicht des lumineszierenden Aggregats und des inerten Aggregats, verwendet wird.

2. Verfahren nach Anspruch 1, wobei im Schritt b) als Grundierung eine Kunstharzschicht in einer Menge von 0,15 bis 1,00 kg/m2, vorzugsweise in einer Menge von 0,5 kg/m2, verwendet wird

3. Verfahren nach einem der vorhergehenden Ansprüche, wobei im Schritt b) eine Schicht aus einem natürlichen Aggregats auf die Kunstharzschicht aufgebracht wird.

4. Verfahren nach Anspruch 3, wobei das natürliche Aggregat in einer Menge von bis zu 1,0 kg/m2, insbesondere in einer Menge von 0,15 kg/m2 verwendet wird.

5. Verfahren nach einem der vorhergehenden Ansprüche, wobei die im Schritt c) aufgetragene Haftmittelschicht eine Kunstharzschicht ist, die in einer Menge von 0,5 bis 4,0 kg/m2, vorzugsweise von 0,5 bis 2,0 kg/m2 und mehr vorzugsweise in einer Menge von 1,5 kg/m2, verwendet wird.

6. Verfahren nach einem der vorhergehenden Ansprüche, wobei das Haftmittel ein zweites pulverisiertes fotolumineszierendes Mittel in einer Menge von 10 bis 40 Gew.-%, bezogen auf das Gesamtgewicht des Haftmittels und des zweiten fotolumineszierenden Mittels, umfasst, wobei das zweite fotolumineszierende Mittel aus einer Gruppe umfassend Aluminate von Erdalkalimetallen ausgewählt ist, aktiviert durch mindestens ein Seltenerdmetall.

7. Verfahren nach einem der vorhergehenden Ansprüche, wobei das erste fotolumineszierende Mittel ein durch Europium und gegebenenfalls Dysprosium aktiviertes Strontiumaluminat SrAl₂O₄ ist.

8. Verfahren nach einem der vorhergehenden Ansprüche, wobei das lumineszierende Aggregat und das optionale inerte Aggregat in einer Menge von 1,0 bis 4,0 kg/m², vorzugsweise in einer Menge von 2,0 kg/m². aufgebracht werden.

9. Verfahren nach einem der vorhergehenden Ansprüche, wobei der Schritt d) der Endbehandlung das Aufbringen einer zusätzlichen Verschlussschicht auf Kunstharzbasis in einer Menge von 0,2 bis 2,0 kg/m2, vorzugsweise 0,9 kg/m2 umfasst.

10. Verfahren nach einem der vorhergehenden Ansprüche, wobei die Verschlussschicht in dem ausgewählten Harz ein drittes pulverisiertes fotolumineszierendes Mittel in einer Menge von 10 bis 40 Gew.-%, bezogen auf ihr Gesamtgewicht, umfasst, wobei das dritte fotolumineszierende Mittel aus einer Gruppe umfassend Aluminate von Erdalkalimetallen ausgewählt ist, aktiviert durch mindestens ein Seltenerdmetall.

11. Lumineszierende Beschichtung, erhalten nach einem Verfahren nach einem der Ansprüche 1 bis 10.

12. Kombination umfassend:
a) ein lumineszierendes Aggregat, umfassend mindestens eine Fraktion, die Partikel mit einer durchschnittlichen Größe im Bereich von 0,8 bis 6 mm enthält,
b) ein inertes Aggregat, umfassend mindestens eine Fraktion, die Partikel mit einer durchschnittlichen Größe im Bereich von 0,8 bis 6 mm, vorzugsweise von 1 bis 4 mm, enthält, und
c) ein Haftmittel,
wobei jedes lumineszierende Aggregatpartikel eine Kombination aus einem synthetischen oder natürlichen Träger umfasst, der permanent mit einem ersten fotolumineszierenden Mittel verbunden ist,
wobei das erste fotolumineszierende Mittel ein Strontiumaluminat oder seine Derivate ist, aktiviert durch mindestens ein Seltenerdmetall,
wobei die Menge an lumineszierendem Aggregat von 8 bis 99 Gew.-%, vorzugsweise 25 Gew.-%, bezogen auf das Gesamtgewicht der Mischung von dem lumineszierenden Aggregat und einem inerten Aggregat, beträgt.

13. Kombination nach Anspruch 12, wobei das erste fotolumineszierende Mittel ein durch Europium und gegebenenfalls Dysprosium aktiviertes Strontiumaluminat SrAl₂O₄ ist..

14. Kombination nach einem der vorhergehenden Ansprüche 12-13, wobei das Haftmittel ein zweites pulverförmiges fotolumineszierendes Mittel in einer Menge von 10 bis 40 Gew.-%, bezogen auf das Gesamtgewicht des Haftmittels und des zweiten fotolumineszierenden Mittels, umfasst, wobei das zweite fotolumineszierende Mittel aus einer Gruppe umfassend Aluminate von Erdalkalimetallen ausgewählt ist, aktiviert durch mindestens ein Seltenerdmetall.

15. Verwendung der Kombination nach einem der vorhergehenden Ansprüche 12 bis 14 zur Herstellung einer Beschichtung.

## Revendications

1. Procédé de production d'un revêtement luminescent comprenant les étapes suivantes:
a) une préparation optionnelle d'un substrat,
b) une application optionnelle d'une couche primaire,
c) l'application d'une couche luminescente par l'application d'au moins une couche d'un agent adhésif et l'application d'un agent luminescent sur la couche d'agent adhésif,
d) un traitement de finition,
**caractérisé en ce que**
dans l'étape c) un agrégat luminescent, qui comprend dans chaque particule d'agrégat une combinaison qui comprend un support synthétique ou naturel connecté en permanence à un premier agent photoluminescent, et optionnellement un agrégat inerte sont utilisés comme agent luminescent, le premier agent photoluminescent étant l'aluminate de strontium, ou ses dérivés, activé par au moins un métal de terre rare,
l'agrégat luminescent étant utilisé en une quantité de 8 à 100 % en poids, de préférence en une quantité de 25 % en poids, par rapport au poids total de l'agrégat luminescent et de l'agrégat inerte.

2. Procédé selon la revendication 1 dans lequel une couche de résine synthétique en une quantité de 0,15 à 1,00 kg/m2, de préférence en une quantité de 0,5 kg/m2, est utilisée dans l'étape b) comme couche primaire.

3. Procédé selon l'une quelconque des revendications précédentes, dans lequel dans l'étape b) une couche d'agrégat naturel est appliquée sur la couche de résine synthétique.

4. Procédé selon la revendication 3, dans lequel l'agrégat naturel est utilisé en une quantité allant jusqu'à 1,0 kg/m2, notamment en une quantité de 0,15 kg/m2.

5. Procédé selon l'une quelconque des revendications précédentes, dans lequel la couche d'agent adhésif appliquée dans l'étape c) est une couche de résine synthétique utilisée en une quantité de 0,5 à 4,0 kg/m2, de préférence de 0,5 à 2,0 kg /m2, et plus préférablement en une quantité de 1,5 kg/m2.

6. Procédé selon l'une quelconque des revendications précédentes, dans lequel l'agent adhésif comprend un deuxième agent photoluminescent en poudre en une quantité de 10 à 40 % en poids par rapport au poids total de l'agent adhésif et du deuxième agent photoluminescent, le deuxième agent photoluminescent étant choisi parmi un groupe comprenant des aluminates de métaux alcalino-terreux activés par au moins un métal de terre rare.

7. Procédé selon l'une quelconque des revendications précédentes, dans lequel le premier agent photoluminescent est l'aluminate de strontium SrAl₂O₄ activé par l'europium et optionnellement le dysprosium.

8. Procédé selon l'une quelconque des revendications précédentes, dans lequel l'agrégat luminescent et l'agrégat inerte optionnel sont appliqués en une quantité de 1,0 à 4,0 kg/m2, de préférence en une quantité de 2,0 kg/m2.

9. Procédé selon l'une quelconque des revendications précédentes, dans lequel l'étape d) du traitement de finition comprend l'application d'une couche de fermeture supplémentaire à base de résine synthétique, en une quantité de 0,2 à 2,0 kg/m2, de préférence 0,9 kg/m2.

10. Procédé selon l'une quelconque des revendications précédentes, dans lequel la couche de fermeture comprend, dans la résine choisie, un troisième agent photoluminescent en poudre en une quantité de 10 à 40 % en poids par rapport à leur poids total, le troisième agent photoluminescent étant choisi parmi un groupe comprenant des aluminates de métaux alcalino-terreux activés par au moins un métal de terre rare.

11. Revêtement luminescent obtenu par un procédé tel que défini dans l'une quelconque des revendications de 1 à **10.**

12. Une combinaison comprenant
a) un agrégat luminescent comprenant au moins une fraction contenant des particules ayant une taille moyenne dans une gamme de 0,8 à 6 mm,
b) un agrégat inerte comprenant au moins une fraction contenant des particules ayant une taille moyenne dans une gamme de 0,8 à 6 mm, de préférence de 1 à 4 mm, et
c) un agent adhésif,
chaque particule d'agrégat luminescent comprenant une combinaison qui comprend un support synthétique ou naturel connecté en permanence à un premier agent photoluminescent,
le premier agent photoluminescent étant l'aluminate de strontium ou ses dérivés, activé par au moins un métal de terre rare,
la quantité d'agrégat luminescent étant de 8 à 99 % en poids, de préférence 25 % en poids, par rapport au poids total du mélange de l'agrégat luminescent et de l'agrégat inerte.

13. Combinaison selon la revendication 12, dans laquelle le premier agent photoluminescent est l'aluminate de strontium SrAl₂O₄ activé par l'europium et optionnellement le dysprosium.

14. Combinaison selon l'une quelconque des revendications précédentes 12-13, dans laquelle l'agent adhésif comprend un deuxième agent photoluminescent en poudre en une quantité de 10 à 40 % en poids , par rapport au poids total de l'agent adhésif et du deuxième agent photoluminescent, le deuxième agent photoluminescent étant sélectionné parmi un groupe comprenant des aluminates de métaux alcalino-terreux activés par au moins un métal de terre rare.

15. Utilisation de la combinaison telle que définie dans l'une quelconque des revendications précédentes de 12 à 14 pour produire un revêtement.
